(19) Europäisches Patentamt
European Patent Office
Office européen des brevets

(11) **EP 3 083 757 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**23.08.2023 Patentblatt 2023/34**

(45) Hinweis auf die Patenterteilung:
**16.09.2020 Patentblatt 2020/38**

(21) Anmeldenummer: **14812257.5**

(22) Anmeldetag: **16.12.2014**

(51) Internationale Patentklassifikation (IPC):
**C08G 65/30** (2006.01)     **C07C 41/34** (2006.01)

(52) Gemeinsame Patentklassifikation (CPC):
**C08G 65/30**

(86) Internationale Anmeldenummer:
**PCT/EP2014/077949**

(87) Internationale Veröffentlichungsnummer:
**WO 2015/091471 (25.06.2015 Gazette 2015/25)**

(54) **VERFAHREN ZUR AUFARBEITUNG VON ALKALISCHEN POLYETHERPOLYOLEN**

METHOD FOR THE TREATMENT OF ALKALINE POLYETHER POLYOLS

PROCÉDÉ DE PRÉPARATION DE POLYÉTHERPOLYOLS ALCALINS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2013 EP 13198081**

(43) Veröffentlichungstag der Anmeldung:
**26.10.2016 Patentblatt 2016/43**

(73) Patentinhaber: **Covestro Intellectual Property GmbH & Co. KG**
**51373 Leverkusen (DE)**

(72) Erfinder:
• **LORENZ, Klaus**
**41539 Dormagen (DE)**
• **MÁRQUEZ BENITEZ, Marco Antonio**
**52998 Atizapan (MX)**

(74) Vertreter: **Levpat**
**c/o Covestro AG**
**Gebäude 4825**
**51365 Leverkusen (DE)**

(56) Entgegenhaltungen:
**WO-A1-01/88015     WO-A1-99/47582**

EP 3 083 757 B2

## EP 3 083 757 B2

**Beschreibung**

Die vorliegende Erfindung betrifft ein einfaches Verfahren zur Herstellung von Polyolen durch basenkatalysierte Addition von Alkylenoxiden (Epoxiden) sowie ggf. weiterer Comonomere an Starterverbindungen mit Zerewitinoff-aktiven Wasserstoffatomen sowie ein Verfahren zur Aufarbeitung alkalischer Rohpolyole.

Zur Herstellung von Polyurethanwerkstoffen wie Weich- oder Hartschaumstoffen bzw. massiven Werkstoffen wie Elastomeren geeignete Polyole werden im Allgemeinen durch Polymerisation geeigneter Alkylenoxide auf polyfunktionelle, d. h. mehrere Zerewitinoff-aktive Wasserstoffatome enthaltende, Starterverbindungen erhalten. Für die Durchführung dieser Polymerisationsreaktionen sind seit langem die verschiedensten Verfahren bekannt, die sich zum Teil komplementär ergänzen: Von großtechnischer Bedeutung ist zum einen die basisch katalysierte Anlagerung von Alkylenoxiden an Starterverbindungen mit Zerewitinoff-aktiven Wasserstoffatomen, zum anderen werden häufig Doppelmetallcyanidverbindungen ("DMC-Katalysatoren") für die Durchführung dieser Reaktion verwendet. Mit dem Einsatz hochaktiver DMC-Katalysatoren, die z.B. in US-A 5 470 813, EP-A 700 949, EP-A 743 093, EP-A 761 708, WO 97/40086, WO 98/16310 und WO 00/47649 beschrieben sind, ist die Polyetherpolyolherstellung bei sehr geringen Katalysatorkonzentrationen (25 ppm oder weniger) möglich, so dass eine Abtrennung des Katalysators aus dem fertigen Produkt nicht mehr erforderlich ist. Diese Katalysatoren sind jedoch für die Herstellung von kurzkettigen Polyolen oder von Polyolen mit einem hohen Gehalt an Oxyethyleneinheiten, insbesondere solchen mit an Oxyethyleneinheiten reichen Endblöcken, nicht geeignet.

Die seit langem bekannten basischen Katalysatoren, z. B. solche auf Basis von Alkalimetallhydroxiden, erlauben die problemlose Herstellung kurzkettiger Polyole und/oder von Polyolen mit einem hohen Gehalt an Oxyethyleneinheiten, der Katalysator muss dann in aller Regel mittels eines separaten Aufarbeitungsschritts aus dem alkalischen Rohpolymerisat entfernt werden. Die durch (Lewis-) Säuren katalysierte Anlagerung von Alkylenoxiden an geeignete Starterverbindungen ist von untergeordneter Bedeutung.

Die basisch katalysierte Anlagerung von Alkylenoxiden, wie beispielsweise Ethylenoxid oder Propylenoxid, an Starterverbindungen mit Zerewitinoff-aktiven Wasserstoffatomen erfolgt, wie bereits erwähnt, in Gegenwart von Alkalimetallhydroxiden, es können aber auch Alkalimetallhydride, Alkalimetallcarboxylate oder tertiäre Amine wie beispielsweise N,N-Dimethylbenzylamin oder N,N-Dimethylaminoethanol oder aromatische Amine, beispielsweise vom Imidazoltyp bzw. dessen Derivate eingesetzt werden. Bei über Amine katalysierten Alkylenoxid additionsreaktionen kann auf eine weitere Aufarbeitung verzichtet werden, sofern die Anwesenheit der Amine in diesen Polyolen die anschließende Herstellung von Polyurethanwerkstoffen nicht beeinträchtigt. Die Aminkatalyse erlaubt jedoch nur die Herstellung von Polyolen mit verhältnismäßig niedrigen Äquivalentgewichten, siehe hierzu beispielsweise Ionescu et al. in "Advances in Urethane Science & Technology", 1998, 14, S. 151-218.

Nach erfolgter Anlagerung der Alkylenoxide unter Anwendung von basischen Katalysatoren, wie beispielweise Alkalimetallhydroxiden, Alkalimetallhydriden oder Alkalimetallcarboxylaten, müssen die polymerisationsaktiven Zentren an den Polyetherketten deaktiviert werden. Hierfür sind verschiedene Vorgehensweisen möglich. Beispielsweise kann mit verdünnten Mineralsäuren wie Schwefelsäure oder Phosphorsäure oder mit (Hydroxy)carbonsäuren neutralisiert werden. Gegebenenfalls kann dem eigentlichen Neutralisationsschritt noch ein Hydrolyseschritt vorgeschaltet sein. Die Stärke der zweiten Dissoziationsstufe der Schwefelsäure reicht zur Protonierung der durch Hydrolyse der aktiven Alkoholatgruppen entstehenden Alkalimetallhydroxide aus, so dass pro mol eingesetzter Schwefelsäure 2 mol Alkoholatgruppen neutralisiert werden können. Phosphorsäure hingegen muss äquimolar zur Menge der zu neutralisierenden Alkoholatgruppen eingesetzt werden.

In vielen Fällen tolerieren nachgeschaltete Polyurethananwendungen den Gehalt an gelöstem Salz (z.B. nach Neutralisation mit Hydroxycarbonsäuren) nicht oder das optische Erscheinungsbild der nach Neutralisation mit anorganischen Mineralsäuren erhaltenen trüben, das ungelöste Salz enthaltenden Polyole wird als Qualitätsnachteil empfunden. Die entstandenen Salze müssen demnach in aller Regel abgetrennt werden. Die zu diesem Zweck besonders kostengünstig durchführbaren Destillations- und Filtrationsprozesse sind häufig nicht gut reproduzierbar, d. h. die Salze fallen bisweilen in schlecht filtrierbarer Qualität an, was zeitaufwändige und wiederholte Filtrations- und Umkristallisationsprozesse nach sich ziehen kann.

Speziell für den Fall der Neutralisation alkalischer Rohpolyole mit anorganischen Säuren, insbesondere Phosphorsäure, wurden Verfahren entwickelt, die eine reproduzierbare Bildung des Salzes in gut filtrierbarer Qualität zum Ziel haben. Beispielsweise beschäftigen sich De Lucas et. al. in Organic Process Research & Development 1999, 3, S. 166 - 171 für den Fall der Neutralisation mit Phosphorsäure mit den Parametern Rührgeschwindigkeit, Verhältnis Neutralisationssäure / Alkalimetallhydroxid (dem sog. "Neutralisationsgrad"), Verhältnis Wasser / Polyol und Wasserverdampfungsgeschwindigkeit. In EP 1292631 wird die bei der Neutralisation eingesetzte Wassermenge optimiert, um Anbackungen von Salz im Inneren des Neutralisationskessels zu vermeiden und damit auch über längere Kampagnendauern gute Wärmeübergangswerte aufrechtzuerhalten. In dieser Patentanmeldung werden in Beispiel 2 Verrührzeiten von 75 min. Dauer nach Zugabe der Säure zum alkalischen Rohpolyol angegeben; eine Aussage über die "Inkontaktbringzeit" von Säure und alkalischem Polyol, d. h. über die Zeitdauer vom Beginn bis zum Abschluss der vollständigen Zugabe der Säure zum Rohpolyol, wird jedoch nicht getroffen. Mit vergleichbarem Ziel werden neutralisierten Polyetherpolyolen vor der Abdestillation des Wassers in DE 10250429 protonierbare oder protonierte stickstoffhaltige Verbindungen als Kristallisationshilfen zugesetzt. Eine bessere Kristallbildung und somit ein verbessertes Filtrationsverhalten wird in der EP 1517941 durch den Zusatz alkalischer Verbindungen während der Destillation des neutralisierten Polyetherpolyols erreicht. Geruchsarme Polyether werden nach der Lehre der WO 9947582 durch Überneutralisation alkalischer Rohpolyether in Gegenwart von Hydrolysewasser, gefolgt von der Neutralisation des Säureüberschusses mit Base nach einer gewissen Verrührzeit, erhalten. Auch in dieser Anmeldung werden "Kontaktzeiten" von 10 min. bis zu 5 h angegeben (S. 5, Zeile 9 - 11, Beispiele 1 und 2). Diese "Kontaktzeiten" sind aber bestenfalls als die Summe aus einer "Inkontaktbringzeit" von Säure und alkalischem Polyol und einer nachfolgenden Verrührzeit zu verstehen. Eine spezifische Aussage über die Zeitdauer vom Beginn bis zum Abschluss der vollständigen Zugabe der Säure zum Rohpolyol wird ebenfalls nicht getroffen. Durch eine bestimmte Kombination aus Neutralisationsgrad und Wassergehalt vor Filtration wird nach der Lehre der WO 2010145899 die Salzabtrennung erleichtert und das Polyetherpolyol auf einfache Weise mit dem spezifizierten Säuregehalt erhalten. Reproduzierbare Filtrationsergebnisse und geruchsarme Polyether werden nach der Lehre der US 4507475 durch Neutralisation des Rohpolyols mit Phosphorsäure in Gegenwart geringer Wassermengen, den Zusatz von Adsorptionsmitteln und Salzabtrennung vor der Abdestillation des Wassers erhalten. Ein weiteres Verfahren zur Aufarbeitung von alkalischen Polyethern ist in dem Dokument WO-A-01/8805 offenbart.

Vor dem Hintergrund des Standes der Technik zeigt sich jedoch, dass in Bezug auf ein einfaches und reproduzierbares Verfahren zur Aufarbeitung von alkalischen Rohpolyolen immer noch Optimierungsbedarf besteht, insbesondere im Hinblick auf den Erhalt von trübungsfreien Produkten mit niedrigen Restsalzgehalten und die Vermeidung von langwierigen und ggf. mehrfach zu wiederholenden Filtrationen.

Aufgabe der vorliegenden Erfindung war es daher ein einfaches Aufarbeitungsverfahren für unter basischer Katalyse hergestellte Polyole zu finden, welches die Nachteile der Verfahren des Standes der Technik nicht aufweist. Erfindungsziel waren insbesondere ein niedriger Restsalzgehalt und niedrige Gesamtbasengehalte der erhaltenen Polyole. Darüber hinaus sollen möglichst kurze Filtrationszeiten bei der Abtrennung der Neutralisationssalze erreicht werden. Polyole mit niedrigen Gesamtbasengehalten können sowohl in "one shot"- als auch in Präpolymeranwendungen breit eingesetzt werden.

Die Aufgabe konnte gelöst werden durch ein Verfahren zur Herstellung von Oxyalkyleneinheiten enthaltenden Polyolen umfassend folgende Schritte:

(a) Addition einer Alkylenoxidverbindung an eine Starterverbindung mit zumindest einem Zerewitinoff-aktiven Wasserstoffatom in Gegenwart eines basischen Katalysators, wobei ein alkalisches Rohpolyol erhalten wird,

(b) anschließende Neutralisation des alkalischen Rohpolyols durch Inkontaktbringen einer Säure mit dem alkalischen Rohpolyol über eine Zeitdauer t1,

(c) gegebenenfalls Abtrennung von Wasser,

(d) Abtrennung der gebildeten Neutralisationssalze,

dadurch gekennzeichnet, dass

in Schritt (b) eine definierte Zeitdauer $t1 \geq 5\,min$ bis $\leq 10\,h$ (Inkontaktbringzeit) für das Inkontaktbringen des alkalischen Rohpolyols mit der für die Neutralisation notwendigen Säuremenge eingehalten wird, wobei unter Inkontaktbringen die Erhöhung des Mengenverhältnisses zwischen Säure und alkalischem Rohpolyol während des Zusammengebens der beiden Komponenten, bis das Zielverhältnis von Säure/Rohpolyol erreicht ist, verstanden wird,

und wobei Phosphorsäure oder Phosphorsäure und Schwefelsäure als Säure eingesetzt wird.

Im Sinne dieser Anmeldung ist unter "Inkontaktbringen" die Erhöhung des Mengenverhältnisses zwischen Säure und alkalischem Rohpolyol während der Zusammengebens der beiden Komponenten zu verstehen, bis das Zielverhältnis Säure / Rohpolyol erreicht ist. Im einfachsten Fall ist das beispielsweise die Phase, während der die Neutralisationssäure zum alkalischen Rohpolyol hinzugegeben wird. Die Inkontaktbringzeit ist wie oben bereits beschrieben zu verstehen.

Das erfindungsgemäße Verfahren ermöglicht eine einfache Herstellung von Polyolen, bei reproduzierbar guten Filtrationsergebnissen in der Aufarbeitung.

Eine Ausführungsform der Erfindung ist daher auch ein Verfahren zur Aufarbeitung von alkalischen Rohpolyolen, die durch

(a) Addition einer Alkylenoxidverbindung an eine Starterverbindung mit zumindest einem Zerewitinoff-aktiven Wasserstoffatom in Gegenwart eines basischen Katalysators hergestellt wurden, umfassend die Schritte:

(b) Neutralisation des alkalischen Rohpolyols durch Inkontaktbringen einer Säure mit dem alkalischen Rohpolyol über eine Zeitdauer t1,

(c) gegebenenfalls Abtrennung von Wasser,

(d) Abtrennung der gebildeten Neutralisationssalze,

**dadurch gekennzeichnet, dass**

in Schritt (b) eine definierte Zeitdauer t1 ≥ 5 min bis ≤ 10 h für das Inkontaktbringen des alkalischen Rohpolyols mit der für die Neutralisation notwendigen Säuremenge eingehalten wird, wobei unter Inkontaktbringen die Erhöhung des Mengenverhältnisses zwischen Säure und alkalischem Rohpolyol während der Zusammengebens der beiden Komponenten, bis das Zielverhältnis von Säure/Rohpolyol erreicht ist, verstanden wird,

und wobei Phosphorsäure oder Phosphorsäure und Schwefelsäure als Säure eingesetzt wird.

Man erhält nach dieser Vorgehensweise überraschenderweise Produkte mit niedrigen Trübungswerten und einer sehr geringen Restalkalinität (Gesamtbasengehalt) und geringem Restsalzgehalt. Es muss als ausgesprochen überraschend bezeichnet werden, dass über die Einhaltung einer definierten Inkontaktbringzeit einer Neutralisationssäure mit einem alkalischen Rohpolyol zum einen Produkte mit erhöhten Reinheiten erhalten werden und zum anderen eine einfache Aufarbeitung mit kurzen Filtrationszeiten erreicht wird. Die Methode ist auf lang- und kurzkettige Polyole anwendbar, wobei die Struktur der Polyetherketten, d. h. die Zusammensetzung des bei der Herstellung der Polyole eingesetzten Alkylenoxidgemisches, ebenfalls variiert werden kann. Das erfindungsgemäße Verfahren ist besonders gut geeignet zur Herstellung von Polyolen, welche mehr als 5 Gew.-% Oxyethyleneinheiten, bezogen auf die Masse aller Monomerbausteine, enthalten. Insbesondere ist das erfindungsgemäße Verfahren geeignet zur Herstellung von Polyolen enthaltend mehr als 5 Gew.-% Oxyethyleneinheiten bezogen auf die Masse aller Monomerbausteine, in welchen die Oxyethyleneinheiten blockweise, beispielsweise als ausschließlich aus Oxyethyleneinheiten bestehender Endblock, angeordnet sind. Unter "Masse aller Monomerbausteine" ist die Gesamtmasse des Polyols abzüglich der Masse der Zerewitinoff-aktive Wasserstoffatome enthaltenden Starterverbindung(en) zu verstehen.

Die Verwendung des Wortes *ein* im Zusammenhang mit abzählbaren Größen ist hierbei und im Folgenden nur dann als Zahlwort zu verstehen, wenn dies aus dem Zusammenhang hervorgeht (beispielsweise durch die Formulierung *"genau ein"*). Ansonsten umfassen Ausdrücke wie "ein Alkylenoxid", "eine Starterverbindung" oder "eine Säure" etc. immer auch solche Ausführungsformen, in denen zwei oder mehr Alkylenoxide, zwei oder mehr Starterverbindungen, zwei oder mehr Säuren etc., möglich auch als Gemische, eingesetzt werden.

Nachfolgend wird die Erfindung im Detail erläutert. Verschiedene Ausführungsformen sind dabei beliebig miteinander kombinierbar, solange sich für den Fachmann aus dem Kontext nicht eindeutig das Gegenteil ergibt.

Unter Polyolen im Sinne der Erfindung sind, soweit nicht explizit spezifiziert, sowohl Polyetherpolyole als auch Polyetheresterpolyole zu verstehen.

Unter Starterverbindungen im Sinne der Erfindung werden Verbindungen verstanden, die mindestens ein Zerewitinoff-aktives Wasserstoffatom aufweisen. An N, O oder S gebundener Wasserstoff wird als Zerewitinoff-aktiver Wasserstoff (oder als "aktiver Wasserstoff") bezeichnet, wenn er nach einem von Zerewitinoff aufgefundenen Verfahren durch Umsetzung mit Methylmagnesiumiodid Methan liefert. Typische Beispiele für Verbindungen mit Zerewitinoffaktivem Wasserstoff sind Verbindungen, die Carboxyl-, Hydroxyl-, Amino-, Imino- oder Thiol-Gruppen als funktionelle Gruppen enthalten.

Unter einem alkalischen Rohpolyol wird erfindungsgemäß ein alkalisches Alkylenoxidadditionsprodukt verstanden, welches durch basisch katalysierte Addition von Alkylenoxiden und ggf. weiterer Comonomeren an Starterverbindungen mit Zerewitinoff-aktiven Wasserstoffatomen erhalten wird, bevor dieses weiteren Aufarbeitungsschritten unterzogen wird.

Nach dem erfindungsgemäßen Verfahren vorteilhaft aufzuarbeitende alkalische Rohpolyole sind insbesondere solche, die bei der alkalimetallhydroxid-, alkalimetallhydrid-, alkalimetallalkoholat- oder alkalimetallcarboxylatkatalysierten Anlagerung von Alkylenoxiden und ggf. weiteren Comonomeren an Starterverbindungen mit mindestens einem Zerewitinoff-aktiven Wasserstoffatom anfallen.

Geeignete Starterverbindungen mit Zerewitinoff-aktiven Wasserstoffatomen weisen meist Funktionalitäten von 1 bis 8 auf, in bestimmten Fällen aber auch Funktionalitäten bis 35. Ihre Molmassen betragen im Allgemeinen von 17 g/mol bis 1200 g/mol, bevorzugt von 32 bis 1200 g/mol, besonders bevorzugt von 62 bis 1200 g/mol. Neben hydroxyfunktionellen Startern können auch Starter mit anderen Funktionalitäten, wie beispielsweise aminofunktionelle Starter eingesetzt werden. Beispiele für hydroxyfunktionelle Starterverbindungen sind Methanol, Ethanol, 1-Propanol, 2-Propanol und höhere aliphatische Monole, insbesondere Fettalkohole, Phenol, alkylsubstituierte Phenole, Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Wasser, Glycerin, Trimethylolpropan, Triethanolamin, Pentaerythrit, Sorbit, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff, sowie Mannichbasen. Bevorzugt werden im erfindungsgemäßen Verfahren als Starterverbindungen Glycerin und Propylenglykol eingesetzt. Es können auch hochfunktionelle Starterverbindungen auf Basis von hydrierten Stärkehydrolyseprodukten eingesetzt werden. Solche sind beispielsweise in EP-A 1 525 244 beschrieben. Beispiele für aminogruppenhaltige Starterverbindungen sind Ammoniak, Ethanolamin, Diethanolamin, Isopropanolamin, Diisopropanolamin, Ethylendiamin, Hexamethylendiamin, Anilin, die Isomere des Toluidins, die Isomere des Diaminotoluols, die Isomere des Diaminodiphenylmethans sowie bei der Kondensation von Anilin mit Formaldehyd zu Diaminodiphenylmethan anfallende höherkernige Produkte. Außerdem können als Starterverbindungen auch Ringöffnungsprodukte aus cyclischen Carbonsäureanhydriden und Polyolen eingesetzt werden. Beispiele sind Ringöffnungsprodukte aus Phthalsäureanhydrid, Bernsteinsäureanhydrid, Maleinsäureanhydid einerseits und Ethylenglykol, Diethylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Pentaerythrit oder Sorbit andererseits. Solche Ringöffnungsprodukte können auch in situ direkt vor dem Start der Alkylenoxidadditionsreaktion im Polymerisationsreaktor hergestellt werden. Daneben ist es auch möglich, ein- oder mehrfunktionelle Carbonsäuren direkt als Starterverbindungen einzusetzen. Es können natürlich auch Gemische verschiedener Starterverbindungen eingesetzt werden.

Für das erfindungsgemäße Verfahren geeignete Alkylenoxide sind neben Ethylenoxid beispielsweise Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid und Pinenoxid. Bevorzugt werden im erfindungsgemäßen Verfahren Ethylenoxid (EO) und / oder Propylenoxid (PO) eingesetzt. Besonders bevorzugt beträgt das Verhältnis von Ethylenoxid und Propylenoxid, bezogen auf die dosierte Alkylenoxidmenge, zwischen 5 Gew.-% Ethylenoxid / 95 Gew.-% Propylenoxid und 80 Gew.-% Ethylenoxid / 20 Gew.-% Propylenoxid. Ganz besonders bevorzugt beträgt das Verhältnis von Ethylenoxid und Propylenoxid, bezogen auf die dosierte Alkylenoxidmenge, zwischen 10 Gew.-% Ethylenoxid / 90 Gew.-% Propylenoxid und 75 Gew.-% Ethylenoxid / 25 Gew.-% Propylenoxid. Weiterhin können zusätzlich zu den Alkylenoxiden auch andere Comonomere eingesetzt werden, welche einzeln oder im Gemisch mit den Alkylenoxiden dosiert werden. Die verschiedenen Alkylenoxide und die gegebenenfalls anderen Comonomere können im Gemisch oder blockweise dosiert werden. Ethylenoxid kann beispielsweise im Gemisch mit den anderen Alkylenoxiden oder blockweise als Anfangs-, Mittel- oder Endblock dosiert werden. Hierbei ist besonders der Einsatz von Ethylenoxid als Reinblock oder der Einsatz von hoch ethylenoxidhaltigen Blöcken neben solchen aus höheren Alkylenoxiden, wie beispielsweise Propylenoxid, hervorzuheben, da sich hiermit nicht nur Polyurethanwerkstoffe mit erhöhter Hydrophilie sondern, sofern das Ethylenoxid als Endblock eindosiert wurde, auch Polyetherpolyole mit einem erhöhten Anteil an primären Hydroxy-Endgruppen erhalten lassen, welche dem Polyetherpolyol eine erhöhte Reaktivität gegenüber Isocyanaten verleihen, was für einige Anwendungen, z.B für Kaltformschaumanwendungen, von Vorteil sein kann. Wechsel der Blockzusammensetzung können während der Epoxiddosierphase diskontinuierlich oder auch, innerhalb kurzer Dosierzeiträume, kontinuierlich vollzogen werden.

In einer Ausführungsform der Erfindung werden als Comonomere cyclische Dicarbonsäureanhydride, wie beispielsweise in US 4647595 oder GB 1108013 beschrieben, oder Lactone eingesetzt. Die so erhältlichen Polyetheresterpolyole können dem erfindungsgemäßen Verfahren im Prinzip in gleicher Weise wie die rein aus Oxyalkyleneinheiten bestehenden Polyetherpolyole unterzogen werden. Bei der Aufarbeitung von estergruppenhaltigen Polyolen sind jedoch solche Verfahrensvarianten zu bevorzugen, bei denen ein längerer Kontakt zwischen dem alkalischen Polyol und Wasser vermieden wird.

Im erfindungsgemäßen Verfahren werden basische Katalysatoren eingesetzt. Geeignete basische Katalysatoren sind beispielsweise Alkalimetallhydride, Alkalimetallcarboxylate (beispielsweise solche von monofunktionellen Carbonsäuren), Alkalimetallhydroxide oder Alkalimetallalkoxylate, beispielsweise von monofunktionellen Alkoholen. Besonders bevorzugt werden im erfindungsgemäßen Verfahren als basische Katalysatoren Alkalimetallhydroxide (wie beispielsweise Natriumhydroxid, Kaliumhydroxid oder Cäsiumhydroxid) oder Alkalimetallalkoxylate mono- oder mehrfunktioneller Alkohole eingesetzt. Als Letztere können auch vorgefertigte Alkylenoxid-Additionsprodukte von Zerewitinoff-aktive Wasserstoffatome enthaltenden Starterverbindungen mit Alkoxylatgehalten von 0,05 bis 50 Äquivalenz-% eingesetzt werden ("polymere Alkoxylate"). Unter dem Alkoxylatgehalt des Katalysators ist der durch eine Base AOH (A = Alkalimetall) durch Deprotonierung entfernte Anteil Zerewitinoff-aktiver Wasserstoffatome an allen ursprünglich im Alkylenoxid-Additionsprodukt des Katalysators vorhanden gewesenen Zerewitinoff-aktiven Wasserstoffatomen zu verstehen. Die Einsatzmenge des polymeren Alkalimetallalkoxylates richtet sich natürlich nach der für die Endproduktmenge angestrebten Katalysatorkonzentration, ausgedrückt als Konzentration an AOH. Ganz besonders bevorzugt werden im erfindungsgemäßen Verfahren Alkalimetallhydroxide, insbesondere Kaliumhydroxid, eingesetzt. Die basischen Katalysatoren werden im Allgemeinen in auf die Masse an alkalischem Rohpolyol bezogenen Mengen von 40 bis 10000 ppm, bevorzugt 200 bis 10000 ppm, eingesetzt.

Die basischen Katalysatoren können den Starterverbindungen als Reinsubstanzen (oft Feststoffe) oder als hochkonzentrierte wässrige Lösungen zugeführt werden. Durch einen der Alkylenoxiddosierphase vorgeschalteten Strippschritt können Lösungswasser und das Wasser, welches beispielsweise durch die Reaktion der besonders bevorzugt zu verwendenden Alkalimetallhydroxide mit den Zerewitinoff-aktiven Wasserstoffatomen den Starterverbindungen entsteht, ggf. abgetrennt werden. Werden bei Alkalimetallhydroxidkatalyse wässrige Lösungen von bei Raumtemperatur festen Starterverbindungen eingesetzt, wird zweckmäßigerweise nur ein Strippschritt durchgeführt, also beispielsweise vor Beginn der eigentlichen Alkylenoxidadditionsphase oder, weniger bevorzugt, nach Unterbrechung einer bereits laufenden Alkylenoxidadditionsreaktion.

Vorzugsweise erfolgt die Umsetzung der wenigstens einen Starterverbindung mit dem oder den Alkylenoxiden bei einer Temperatur von 70 bis 170 °C, besonders bevorzugt bei einer Temperatur von 100 bis 160 °C.

Die Reaktionstemperatur kann während der Alkylenoxiddosierphase innerhalb der vorstehend beschriebenen Grenzen variiert werden: Um eine optimale Abstimmung zwischen hohem Alkylenoxidumsatz und geringer Nebenproduktbildung bei Verwendung empfindlicher Starterverbindungen (wie beispielsweise Saccharose) zu erreichen, kann zunächst bei niedrigen Reaktionstemperaturen (beispielsweise bei 70 bis 110 °C) alkoxyliert werden, und erst bei hinreichendem Starterumsatz, beispielsweise sobald mindestens 50 Gew.-% der eingesetzten Starterverbindungen an mindestens einem Zerewitinoff-aktiven Wasserstoffatom mit Alkylenoxid reagiert haben, zu höheren Reaktionstemperaturen (beispielsweise auf 110 bis 130 °C) übergegangen werden. Nachreaktionen können ebenfalls bei höheren Temperaturen (d.h. nach Anhebung der Temperatur auf 100 bis 170 °C, bevorzugt 100 bis 150 °C) durchgeführt werden. Werden langkettige Polyetherpolyole, d. h. Polyetherpolyole mit Äquivalentmolmassen von größer 500 Da hergestellt, so wird empfohlen bei Erreichen von hohen Äquivalentmolmassen und bei Dosierung von Blöcken mit hohen Gehalten an Oxypropyleneinheiten, beispielsweise bei 500 Da oder höheren Äquivalentmolmassen, die Reaktionstemperatur auf Werte von 120 °C, bevorzugt 110 °C oder niedriger, zu beschränken, um Nebenreaktionen des Propylenoxids, insbesondere seine Umlagerung in Allylalkohol auf ein tolerierbares Maß zu reduzieren. Unter Äquivalentmolmasse ist die durch die Zahl der aktiven Wasserstoffatome (Funktionalität) geteilte zahlenmittlere Gesamtmolmasse des aktive Wasserstoffatome enthaltenden Materials zu verstehen Das Ausmaß dieser Nebenreaktion nimmt naturgemäß mit dem Gehalt an Propylenoxid im dosierten Alkylenoxidgemisch zu, daher gewinnt die Beschränkung der Reaktionstemperatur dann an Bedeutung, wenn der Propylenoxidgehalt im dosierten Alkylenoxidgemisch Werte von 30 Gew.-% überschreitet, insbesondere wenn er Werte von 50 Gew.-% oder gar 70 Gew.-% überschreitet. Die Dosierung von Blöcken mit hohen Gehalten an Oxyethyleneinheiten oder von rein aus Oxyethyleneinheiten bestehenden Blöcken sowie Nachreaktionen können wiederum bei höheren Temperaturen (d.h. nach Anhebung der Temperatur auf 120 bis 170 °C, bevorzugt 120 bis 150 °C) durchgeführt werden.

Die Temperatur der exothermen Alkylenoxidadditionsreaktion muss gegebenenfalls durch Kühlung auf dem gewünschten Niveau gehalten werden. Gemäß dem Stand der Technik zur Auslegung von Polymerisationsreaktoren für exotherme Reaktionen (z. B. Ullmann's Encyclopedia of Industrial Chemistry, Band B4, Seite 167ff, 5. Ausgabe, 1992) erfolgt eine solche Kühlung im Allgemeinen über die Reaktorwand (z. B. Doppelmantel, Halbrohrschlange) sowie mittels weiterer intern im Reaktor und/oder extern im Umpumpkreislauf angeordneter Wärmetauscherflächen, z.B. an Kühlschlangen, Kühlkerzen, Platten-, Rohrbündel- oder Mischerwärmetauschern. Diese sollten vorteilhafterweise so ausgelegt sein, dass auch zu Beginn der Dosierphase, d. h. bei kleinem Füllstand, und in Gegenwart eines heterogenen Reaktorinhalts (beispielsweise bei Vorliegen von Feststoffdispersionen) effektiv gekühlt werden kann.

Die berechneten OH-Zahlen der nach dem erfindungsgemäßen Verfahren aufzuarbeitenden alkalischen Polyole weisen im Allgemeinen Werte von 15 mg KOH/g bis 1000 mg KOH/g, besonders bevorzugt von 20 mg KOH/g bis 500 mg KOH/g, ganz besonders bevorzugt von 25 mg KOH/g bis 300 mg KOH/g auf.

Die Äquivalentmolmasse steht gemäß Gleichung (1) mit der durch Titration ermittelbaren OH-Zahl in Beziehung.

$$\text{OH-Zahl [mg KOH/g]} = 56100 \text{ [mg KOH / mol]} / \text{Äquivalentmolmasse [g / mol]} \qquad (1)$$

Der Reaktionsfortschritt bei der Umsetzung der Starterverbindungen mit Alkylenoxiden geht somit einher mit einer Abnahme der OH-Zahl, gemäß der in Gleichung (1) gegebenen Beziehung.

Generell ist in allen Reaktionsphasen durch Auslegung und Einsatz handelsüblicher Rührorgane für eine gute Durchmischung des Reaktorinhaltes zu sorgen, wobei hier insbesondere ein- oder mehrstufig angeordnete Rührer oder großflächig über die Füllhöhe wirkende Rührertypen geeignet sind (siehe z.B. Handbuch Apparate; Vulkan-Verlag Essen, 1. Aufl. (1990), S.188 - 208). Besonders technisch relevant ist hierbei eine im Mittel über den gesamten Reaktorinhalt eingetragene volumenspezifische Mischleistung, die im Allgemeinen im Bereich von 0,2 W/l bis 5 W/l, bezogen auf das Reaktorvolumen, liegt, mit entsprechend höheren volumenspezifischen lokalen Leistungseinträgen im Bereich der Rührorgane selbst und gegebenenfalls bei niedrigeren Füllständen. Um eine optimale Rührwirkung zu erzielen, können im Reaktor gemäß allgemeinem Stand der Technik Kombinationen aus Stromstörern (beispielsweise Flach- oder Rohrstromstörer) und Kühlschlangen (oder Kühlkerzen) angeordnet werden, die sich auch über den Behälterboden erstrecken können. Die Rührleistung des Mischaggregates kann während der Dosierphase auch füllstandsabhängig variiert werden, um in kritischen Reaktionsphasen einen besonders hohen Leistungseintrag zu gewährleisten. Beispielsweise kann es vorteilhaft sein, feststoffhaltige Dispersionen, die zu Reaktionsbeginn bei der (Mit-)Verwendung von Saccharose vorliegen können, oder viskose Starterschmelzen besonders intensiv zu durchmischen. Außerdem ist beim Einsatz fester Starter durch die Wahl des Rühraggregates sicherzustellen, dass eine ausreichende Dispergierung des Feststoffes im Reaktionsgemisch gewährleistet ist. Bevorzugt werden hier bodengängige Rührstufen sowie besonders zur Suspendierung geeignete Rührorgane eingesetzt. Ferner sollte die Rührergeometrie zur Minderung des Aufschäumens von Reaktionsprodukten beitragen. Das Aufschäumen von Reaktionsgemischen kann beispielsweise nach Ende der Dosier- und Nachreaktionsphase beobachtet werden, wenn Restalkylenoxide zusätzlich im Vakuum bei absoluten Drücken im Bereich von 1 mbar bis 500 mbar entfernt werden. Für solche Fälle haben sich Rührorgane als geeignet herausgestellt, die eine kontinuierliche Durchmischung der Flüssigkeitsoberfläche erzielen. Je nach Anforderung weist die Rührwelle ein Bodenlager und ggf. weitere Stützlager im Behälter auf. Der Antrieb der Rührerwelle kann dabei von oben oder unten erfolgen (mit zentrischer oder exzentrischer Anordnung der Welle).

Alternativ ist es auch möglich, die notwendige Durchmischung ausschließlich mittels eines über einen Wärmetauscher geführten Umpumpkreislaufs zu erzielen oder diesen zusätzlich zum Rühraggregat als weitere Mischkomponente zu betreiben, wobei der Reaktorinhalt nach Bedarf (typischerweise 1 bis 50 mal pro Stunde) umgepumpt wird. Die mittels Umpumpung, beispielsweise über einen außenliegenden Wärmetauscher über diesen oder bei Rückführung in den Reaktor über eine Düse oder Injektor, eingetragene spezifische Mischenergie beläuft sich ebenfalls auf Werte von im Mittel 0,2 bis 5 W/L, wobei diese auf das im Reaktor und den Umpumpkreislauf am Ende der Reaktionsphase befindliche Flüssigkeitsvolumen bezogen ist. Es ist natürlich auch möglich die notwendige Durchmischung durch Kombination eines Rühraggregates mit einem, beispielsweise über einen oder mehrere (externe) Wärmetauscher geführten, Umpumpkreislauf zu erreichen.

Die Alkylenoxide können dem Reaktor auf unterschiedliche Weise zugeführt werden: Möglich ist eine Dosierung in die Gasphase oder direkt in die Flüssigphase, beispielsweise über ein Tauchrohr oder einen in der Nähe des Reaktorbodens in einer gut durchmischten Zone befindlichen Verteilerring. Die kontinuierliche Dosierung des wenigstens einen Alkylenoxids erfolgt so, dass die sicherheitstechnischen Druckgrenzen nicht überschritten werden. Diese richten sich naturgemäß nach den im Einzelfall vorliegenden apparativen Gegebenheiten, wobei der Prozess im Allgemeinen in einem Druckbereich von 1 mbar bis 10 bar, besonders bevorzugt von 1 mbar bis 4 bar ausgeführt wird. Insbesondere bei der Dosierung von ethylenoxidhaltigen Alkylenoxidgemischen oder reinem Ethylenoxid ist vorteilhafterweise darauf zu achten, dass ein ausreichender Inertgaspartialdruck im Reaktor während der Anfahr- und Dosierphase aufrechterhalten wird. Dieser kann beispielsweise durch Edelgase oder Stickstoff eingestellt werden. Bei Dosierung in die Flüssigphase sollten die Dosieraggregate selbstleerend ausgelegt sein, beispielsweise durch Anbringen der Dosierbohrungen an der Unterseite des Verteilerrings. Generell sollte durch apparative Maßnahmen, beispielsweise durch die Montage von Rückschlagklappen, ein Rückströmen von Reaktionsmedium in die Dosieraggregate und Eduktvorlagen verhindert werden. Wird ein Alkylenoxidgemisch dosiert, können die jeweiligen Alkylenoxide dem Reaktor separat oder als Mischung zugeführt werden. Eine Vorvermischung der Alkylenoxide untereinander kann beispielsweise durch ein in der gemeinsamen Dosierstrecke befindliches Mischaggregat erreicht werden ("inline-Blending"). Es hat sich auch bewährt, die Alkylenoxide pumpendruckseitig in einen beispielsweise über einen oder mehrere Wärmetauscher geführten Umpumpkreislauf einzeln oder vorgemischt zu dosieren. Für die gute Durchmischung mit dem Reaktionsmedium ist es dann von Vorteil ein hochscherendes Mischaggregat in den Alkylenoxid- / Reaktionsmediumstrom zu integrieren.

Generell sind die unterschiedlichsten Reaktortypen für die Durchführung des erfindungsgemäßen Verfahrens geeignet. Im Allgemeinen werden zylinderförmige Behälter eingesetzt, welche ein Höhen- zu Durchmesserverhältnis von 1:1 bis 10:1 besitzen. Als Reaktorböden kommen beispielsweise Kugel-, Klöpper-, Flach- oder Konusböden in Frage.

Nach Ende der Epoxiddosierung oder bei einem Wechsel der Zusammensetzung des dosierten Alkylenoxidgemisches können sich Nachreaktionsphasen anschließen, in denen restliches Alkylenoxid abreagiert. Das Ende einer solchen Nachreaktionsphase ist erreicht, wenn kein weiterer Druckabfall im Reaktionskessel mehr feststellbar ist. Spuren unreagierter Alkylenoxide können nach der (Nach-)Reaktionsphase gegebenenfalls im Vakuum bei einem absoluten Druck von 1 mbar bis 500 mbar oder durch Strippen quantitativ entfernt werden. Durch Strippen werden flüchtige Bestandteile, wie beispielsweise (Rest-)Alkylenoxide, unter Einleiten von Inertgasen oder Wasserdampf in die Flüssigphase bei gleichzeitig angelegtem Vakuum, beispielsweise durch Durchleiten von Inertgas bei einem Absolutdruck von 5 mbar bis 500 mbar. entfernt. Das Entfernen flüchtiger Bestandteile, wie beispielsweise nicht umgesetzter Alkylenoxide, entweder im Vakuum oder durch Strippen, erfolgt bei Temperaturen von 20 °C bis 200 °C, bevorzugt bei 50 °C bis 160 °C und vorzugsweise unter Rühren. Die Strippvorgänge können auch in sog. Strippkolonnen durchgeführt werden, in denen dem Produktstrom ein Inertgas- oder Wasserdampfstrom entgegengeleitet wird. Bevorzugt wird das Strippen mit Inertgasen in Abwesenheit von Wasserdampf durchgeführt.

Nach Erreichen von Druckkonstanz bzw. ggf. nach Entfernen flüchtiger Bestandteile im Vakuum und/oder Strippen wird das alkalische Rohprodukt dem erfindungsgemäßen Aufarbeitungsverfahren unterzogen. Es hat sich als vorteilhaft erwiesen solche Rohpolyole hierbei ganz generell unter Inertgasatmosphäre zu handhaben. Hierfür geeignete Inertgase sind beispielsweise Edelgase oder Stickstoff, besonders häufig wird Stickstoff verwendet. Durch die Unterbindung von Sauerstoffzutritt lassen sich Produktverfärbungen weitestgehend vermeiden, dies gilt insbesondere bei erhöhten Temperaturen, die im Allgemeinen genutzt werden um durch Senkung der Viskosität die Handhabung der Polyetherpolyole in den Aufarbeitungsschritten zu erleichtern. Darüber hinaus entstehen unter Inertgasatmosphäre auch deutlich weniger Peroxidgruppen, die unter Spaltung der Polyetherketten zur Bildung weiterer niedermolekularer oxidativer Abbauprodukte wie beispielsweise Acetaldehyd, Methanol, Ameisensäure, Ameisensäureester, Aceton und Formaldehyd beitragen. Somit können Qualitätsminderungen vermieden werden.

Das alkalische Rohpolyol kann vor dem Inkontaktbringen mit der Neutralisationssäure in Schritt (b) des erfindungsgemäßen Verfahrens zunächst mit Wasser unter Hydrolysebedingungen versetzt werden, wodurch aus den Metallalkoholatgruppen des Rohpolyols Hydroxylgruppen sowie das entsprechende Metallhydroxid, als Lösung im Rohpolyol, regeneriert werden. Im erfindungsgemäßen Sinne umfasst der Begriff "alkalisches Rohpolyol" daher auch die Ausführungsform eines "hydrolysierten alkalischen Rohpolyols". Ein solcher Hydrolyseschritt wird in aller Regel bei Temperaturen von 80 - 120 °C durchgeführt und man verwendet hierbei üblicherweise Wassermengen von 0,5 bis 25 Gew.-%, bevorzugt von 1 bis 20 Gew.-%, bezogen auf die Menge an alkalischem Rohpolyol. Der Hydrolyseschritt kann sowohl durch Mischen im Neutralisationskessel als auch durch inline-Blending beider Komponenten, Wasser und Rohpolyol, beispielsweise während des Transfers des alkalischen Rohpolyols vom Reaktor in den Neutralisationskessel, erfolgen. Eine Ausführungsform des erfindungsgemäßen Verfahrens umfasst daher einen Hydrolyseschritt zwischen den Schritten (a) und (b). Für die Durchführung des erfindungsgemäßen Verfahrens ist ein solcher vorgeschalteter separater Hydrolyseschritt jedoch nicht essentiell.

Die eigentliche Neutralisation erfolgt, indem in Schritt (b) des erfindungsgemäßen Verfahrens das alkalische Rohpolyol über eine Zeitdauer t1 von $\geq$ 5 min bis $\leq$ 10 h mit der für die Neutralisation notwendigen Säuremenge in Kontakt gebracht wird. In einer bevorzugten Ausführungsform wird hierbei eine Zeitdauer ("Inkontaktbringzeit") t1 von $\geq$ 5 min bis $\leq$ 6 h eingehalten. Während des Inkontaktbringens kann beispielsweise die Zugabe der Säure zum Rohpolyol über eine konstante Zudosierrate erfolgen, wobei die Zudosierrate (Säurezugabemenge pro Zeiteinheit) während der Inkontaktbringzeit konstant ist. Weiterhin ist auch eine Dosierrampe, bei der sich die Dosierrate während der Inkontaktbringzeit ändert (z.B. erhöht oder erniedrigt). Eine weitere Ausführungsform besteht in der stufenweise Zugabe von Säureteilmengen innerhalb der Inkontaktbringzeit. Zusätzlich besteht auch die Möglichkeit der Kombination der angeführten Inkontaktbringformen. Die Zugabe der Säure zum Rohpolyol soll bei Variation der Zugabegeschwindigkeit oder bei stufenweiser Zugabe so erfolgen, dass 90 % des Zielmengenverhältnisses Säure / Rohpolyol nicht früher als nach 2 min., bevorzugt nicht früher als nach 3 min nach Beginn der Zugabe erreicht werden. Die obere Begrenzung der Inkontaktbringzeit ist im Allgemeinen durch verfahrenstechnische bzw. wirtschaftliche Beschränkungen vorgegeben, da eine Zugabedauer von mehr als 10 h üblicherweise weder praktikabel noch vorteilhaft erscheint. Typischerweise beträgt in einer Ausführungsform der Erfindung die Inkontaktbringzeit t1 von 5 min bis 240 min, bevorzugt von 5 min bis 180 min und besonders bevorzugt von 5 min bis 150 min, sowie ganz besonders bevorzugt von 5 min bis 120 min. Üblicherweise (i)) erfolgt das Inkontaktbringen des ggf. bereits hydrolysierten alkalischen Rohpolyols mit der Neutralisationssäure, indem diese dem im Neutralisationskessel vorgelegten alkalischen Rohpolyol über eine Zeitdauer von $\geq$ 5 min bis $\leq$ 10 h zugefügt wird. Alternativ (ii)) kann beispielsweise auch ein Anteil des ggf. bereits hydrolysierten Rohpolyols im Neutralisationskessel vorgelegt werden und eine Mischung aus dem restlichen Polyol und der Menge der zur Neutralisation der Gesamtmenge des alkalischen Rohpolyols notwendigen Säuremenge danach in den Neutralisationskessel dosiert werden. Eine solche Mischung kann separat in einem Vormischkessel oder auch durch inline-Blending während des Transfers der ggf. bereits hydrolysierten Restmenge an alkalischem Rohpolyol in den Neutralisationskessel angefertigt werden. Beim Vorgehen nach Verfahrensvariante ii) ist es erfindungsgemäß entscheidend, dass die Gesamtzeit, die zur Herstellung der Mischung aus der Restmenge des alkalischen Rohpolyols und der Neutralisationssäure und der Dosierung dieser Mischung zu dem bereits im Neutralisationskessel vorgelegten Anteil an Rohpolyol benötigt wird, $\geq$ 5 min bis $\leq$ 10 h beträgt. Als weniger bevorzugte Alternative (iii)) kann die notwendige Menge an Neutralisationssäure im Neutralisationskessel auch vorgelegt und das ggf. bereits hydrolysierte alkalische Rohpolyol der Säure über einen Zeitraum von $\geq$ 5 min bis $\leq$ 10 h zugefügt werden. Des Weiteren kann (iv)) auch ein Anteil der Neutralisationssäure im Neutralisationskessel vorgelegt werden und eine Mischung aus restlicher Neutralisationssäure und dem alkalischen Rohpolyol danach in den Neutralisationskessel dosiert werden. Eine solche Mischung kann separat in einem Vormischkessel oder auch durch inline-Blending der restlichen Menge an Neutralisationssäure und dem ggf. bereits hydrolysierten alkalischen Rohpolyol während dessen Transfer in den Neutralisationskessel angefertigt werden. Beim Vorgehen nach Verfahrensvariante iv) ist es erfindungsgemäß entscheidend, dass die Gesamtzeit, die zur Herstellung der Mischung aus der Restmenge der Neutralisationssäure und dem alkalischen Rohpolyol und der Dosierung dieser Mischung zu dem bereits im Neutralisationskessel vorgelegten Anteil an Neutralisationssäure benötigt wird, $\geq$ 5 min bis $\leq$ 10 h beträgt. Auch bei den Ausführungsvarianten ii - iv kann während des Inkontaktbringens das Zusammengeben der beiden Komponenten (Säure und Rohpolyol) beispielsweise mit konstanten Mengenströmen erfolgen, d. h. das Mengenverhältnis zwischen Säure und Rohpolyol erhöht sich konstant. Darüber hinaus kann das Zusammengeben der beiden Komponenten auch in der Weise erfolgen, dass der Mengenstrom einer der beiden Komponenten relativ zum Mengenstrom der anderen Komponente während der Inkontaktbringzeit erhöht oder gesenkt wird. Eine weitere Ausführungsform besteht in der stufenweise Zugabe von Teilmengen der einen Komponente zur anderen innerhalb der Inkontaktbringzeit. Zusätzlich besteht auch die Möglichkeit der Kombination der angeführten Inkontaktbringformen. Das Zusammengeben der beiden Komponenten sollte bei Variation des Mengenstromverhältnisses oder bei stufenweisem Zusammengeben so erfolgen, dass 90 % des Zielmengenverhältnisses Säure / Rohpolyol nicht früher als nach 2 min., bevorzugt nicht früher als nach 3 min. erreicht werden. Für das erfindungsgemäße Verfahren werden Phosphorsäure und Schwefelsäure oder Phosphorsäure als Säure eingesetzt. Die Neutralisation kann beispielsweise bei Temperaturen von 20 °C bis 150 °C durchgeführt werden. Bevorzugt werden alkalisches Rohpolyol und Neutralisationssäure bei einer Temperatur von 60 bis 140 °C in Kontakt gebracht, ganz besonders bevorzugt bei einer Temperatur von 80 bis 130 °C.

Das Polyol enthält nach der Neutralisation in Schritt (b) des erfindungsgemäßen Verfahrens vorzugsweise eine Gesamtwassermenge von 0,5 bis 25 Gew.-%, besonders bevorzugt von 2 bis 20 Gew.-%, ganz besonders bevorzugt von 3 bis 17 Gew.-%, insbesondere bevorzugt von 4 bis 15 Gew.-%, bezogen auf die Menge an alkalischem Rohpolyol, wobei sich die Gesamtwassermenge aus der zur Hydrolyse des alkalischen Rohpolyols verwendeten Wassermenge und der in der wässrigen Säurelösung enthaltenen Wassermenge zusammensetzt. Während des Neutralisationsvorganges sollte das entstehende Gemisch aus ggf. hydrolysiertem Rohpolyol und Neutralisationssäure durch Rühren und / oder Umpumpen über ein geeignetes Scheraggregat durchmischt werden. Es empfiehlt sich die Durchmischung so durchzuführen, dass entstehende Salzpartikel in für den nachfolgenden Filtrationsschritt ausreichender Größe und geeigneter Morphologie entstehen können und beispielsweise nicht durch übermäßige Scherbeanspruchung daran gehindert oder wieder zerstört werden, siehe auch De Lucas et. al. in Organic Process Research & Development 1999, 3, S. 166 - 171. Insbesondere sind hierfür ein- oder mehrstufig angeordnete Rührer oder großflächig über die Füllhöhe wirkende Rührertypen, z. B. sogenannte Gitterrührer, geeignet (siehe z.B. Handbuch Apparate; Vulkan-Verlag Essen, 1. Aufl. (1990), S.188 - 208). Die bei Vermischung von Säure und Rohpolyol und ggf. bei Abtrennung des Wassers über Destillation im Mittel über den gesamten Reaktorinhalt eingetragene volumenspezifische Mischleistung liegt vorteilhafterweise im Bereich von 0,01 W/1 bis 2 W/l, bevorzugt zwischen 0,01 W/1 bis 1 W/1 und besonders bevorzugt im Bereich von 0,01 W/1 bis 0,7 W/l, bezogen auf das Reaktorvolumen. Im Bereich der Rührorgane selbst können volumenspezifisch lokal höhere Leistungseinträge beobachtet werden. Die für die Neutralisation des alkalischen Katalysators notwendige Stoffmenge an Neutralisationssäure wird durch den Neutralisationsgrad definiert. Unter dem Neutralisationsgrad wird die auf die zu neutralisierende Stoffmenge alkalischen Katalysators, bzw. auf den Alkoxylatgehalt des Alkylenoxidadditionsprodukts, bezogene prozentuale Menge zugesetzter Neutralisationsäquivalente (wirksamer Säureäquivalente) verstanden. Dies sei am Beispiel dererfindungsgemäß bevorzugten Säuren $H_2SO_4$ und $H_3PO_4$ näher erläutert. Da die Stärke der zweiten Dissoziationsstufe der Schwefelsäure zur Protonierung der durch Hydrolyse der aktiven Alkoholatgruppen entstehenden Alkalimetallhydroxide ausreicht, können pro mol eingesetzter Schwefelsäure 2 mol Alkoholatgruppen neutralisiert werden, pro mol eingesetzter Schwefelsäure stehen also 2 mol Neutralisationsäquivalente zur Verfügung. Somit entspricht ein Neutralisationsgrad von 100 % dem molaren Verhältnis von $H_2SO_4$ / Alkalimetallkatalysator = 0,5. Die schwächere Phosphorsäure kann hingegen nur ein Neutralisationsäquivalent zur Verfügung stellen, daher muss sie äquimolar zur Menge der zu neutralisierenden Alkoholatgruppen eingesetzt werden. Somit entspricht im Falle der Phosphorsäure ein Neutralisationsgrad von 100 % dem äquimolaren Verhältnis $H_3PO_4$ / Alkalimetallkatalysator. Allgemein gilt also im Falle der Neutralisation von Alkalimetallkatalysatoren, z. B. KOH, mit einer Säure S, die pro mol n mol Neutralisationsäquivalente zur Verfügung stellen kann, für den Neutralisationsgrad:

$$\text{Neutralisationsgrad}_{\text{Säure S}} = 100 \text{ x } n \text{ x Mole [Säure S] / Mole Katalysator} \qquad (2)$$

Die Neutralisationsgrade bei Verwendung von Schwefelsäure oder Phosphorsäure berechnen sich folglich nach den Gleichungen (3) und (4)

$$\text{Neutralisationsgrad}_{\text{Schwefelsäure}} = 200 \text{ x Mole } [H_2SO_4] \text{ / Mole Katalysator} \qquad (3)$$

$$\text{Neutralisationsgrad}_{\text{Phosphorsäure}} = 100 \text{ x Mole } [H_3PO_4] \text{ / Mole Katalysator} \qquad (4)$$

Im Allgemeinen werden Neutralisationsgrade zwischen 90 und 120 % angestrebt, bevorzugt sind Neutralisationsgrade zwischen 100 und 115 %, ganz besonders bevorzugt sind Neutralisationsgrade zwischen 102 und 112 %.

Zur Durchführung des erfindungsgemäßen Verfahrens können die Neutralisationssäuren, in wässriger Lösung eingesetzt werden. Es ist hierbei im Allgemeinen unwesentlich, in welcher Konzentration die wässrigen Säurelösungen eingesetzt werden, üblicherweise können Konzentrationen zwischen 5 Gew.-% und 70 Gew.-% verwendet werden. Bevorzugte Säurekonzentrationen liegen im Bereich von 8 Gew.-% bis 55 Gew.-%, besonders bevorzugt von 10 Gew.-

% bis 50 Gew.-%. Die Säurekonzentration wird vorteilhafterweise so gewählt, dass mit den zur Verfügung stehenden Dosieraggregaten eine hinreichende Dosiergenauigkeit erreicht werden kann. Es ist selbstverständlich, dass zur Einhaltung einer Mindestinkontaktbringzeit t1 der Masse- bzw. Volumenstrom der Säuredosierung der gewählten Säurekonzentration anzupassen ist. Beispielsweise darf zur Einhaltung einer bestimmten Mindestinkontaktbringzeit t1 der Massestrom einer 20 gew.-%igen wässrigen Säurelösung nur halb so groß sein wie der Massestrom einer 10 gew.-%igen wässrigen Säurelösung. Vom Einsatz hochkonzentrierter Säuren ist in solchen Fällen abzuraten, bei denen eine Schädigung des Substratpolyols durch kurzzeitig bestehende lokal hohe Säurekonzentrationen zu befürchten ist, wie beispielsweise beim Einsatz von Schwefelsäure. Zur Kontrolle der Menge an dosierter Säure sowie der Säuredosiergeschwindigkeit kommen im Allgemeinen Kombinationen aus Pumpen und Massedurchflussmessern, z. B. solchen, die nach dem Coriolis-Prinzip arbeiten, zum Einsatz. Besonders gut geeignete Pumpentypen sind z. B. magnetgekoppelte Spaltrohrmotorpumpen. Für die Durchführung des erfindungsgemäßen Verfahrens ist es von Vorteil, wenn die Neutralisation in Schritt (b) durch Inkontaktbringen des Rohpolyols mit der Neutralisationssäure über die Zeitdauer t1 weitgehend kontinuierlich, also mit weitgehend konstanter Dosierrate, erfolgt.

Nach dem Inkontaktbringen von alkalischem Rohpolyol und Neutralisationssäure kann die Durchmischung beider Komponenten durch Rühren und / oder Umpumpen über einen gewissen Zeitraum weiter verbessert werden. Hierbei sollte, wie bereits im vorangehenden Abschnitt erwähnt, die Durchmischung so durchgeführt werden, dass Entstehung und Erhalt von Salzpartikeln in für den nachfolgenden Salzabtrennschritt ausreichender Größe und geeigneter Morphologie gewährleistet sind. Die Dauer einer solchen Durchmischungsphase ist variabel, sie sollte experimentell ermittelt werden. Gute Indikatoren für eine ausreichende Durchmischungszeit sind ein stabiler pH-Wert und / oder eine stabile Säurezahl. Die bei der Durchmischung gewählte Temperatur kann im gleichen Bereich wie die Neutralisationstemperatur gewählt werden.

Nach der Beendigung der Rohpolyolneutralisation ist auch ein geeigneter Zeitpunkt zum Zusatz von Antioxidantien erreicht. Viele Antioxidantien, insbesondere solche mit phenolischen Hydroxylgruppen, verleihen alkalischen Rohpolyolen eine unerwünschte Färbung, daher werden sie bevorzugt erst nach erfolgter Neutralisation zugesetzt.

In den meisten Fällen ist der Salzabtrennung über Filtration oder Sedimentation ein Destillationsschritt (c) vorgeschaltet. Die Wasserabtrennung über Destillation kann auf verschiedene Weisen geschehen. Häufig wird Wasser zunächst unter Normaldruck und später im Vakuum abgetrennt, bis Druck- und Temperaturwerte erreicht sind, bei denen der Restwassergehalt im Polyol innerhalb der spezifizierten Grenzen liegt, beispielsweise bei der Kombination aus einem Druck von 5 mbar und einer Temperatur von 120 °C. Eine solche Destillation kann, beispielsweise vor dem Eintritt in die Vakuumphase, zur Durchführung des Filtrationsschrittes auch unterbrochen werden. Bei dieser Vorgehensweise wird die Feindestillation erst nach der Filtration durchgeführt. Die nach der Normaldruckdestillation verbleibenden geringen Wassermengen sind in aller Regel in den Polyolen vollständig löslich, so dass das Salz zu diesem Zeitpunkt bereits vollständig auskristallisiert ist. Manchmal ist eine quantitative Salzbildung sogar völlig ohne Abtrennung des Wassers möglich, beispielweise dann, wenn Polyole mit niedrigen Äquivalentmolmassen aufgearbeitet werden, die mit hohen Wassermengen vollständig mischbar sind. Im erfindungsgemäßen Aufarbeitungsverfahren ist es auch möglich die Salzabtrennung über Filtration durch Adsorbentien zu unterstützen. Es ist vorteilhaft, solche Adsorbentien vor oder während der Wasserabtrennung zuzusetzen, da sich herausgestellt hat, dass sie besonders wirksam sind, wenn das Polyol noch einen gewissen Wassergehalt aufweist. Hierfür geeignete Adsorbentien sind beispielsweise Schichtsilikate (Bentonit, Attapulgit), Diatomeenerde (Celite) oder auch synthetische Magnesiumsilikate wie AMBOSOL® oder BriteSorb®.

Die Abtrennung der Salzpartikel erfolgt bevorzugt über Filtration und kann unter Zuhilfenahme unterschiedlichster Filtrationsapparate geschehen. Im großtechnischen Maßstab werden häufig sogenannte Anschwemmfiltrationen durchgeführt, bei denen der Filterkuchen selbst als wirksame Filterschicht wirkt. Das salzpartikelhaltige Polyol wird dann in der Regel zunächst im Kreislauf durch den Filtrationsapparat geleitet, bis sich ein Filterkuchen mit ausreichender Tiefenfilterwirkung aufgebaut hat ("Trüblaufzeit"), bevor das dann klar filtrierende Produkt in die Endvorlage überführt wird. Zur Unterstützung des Filterkuchenaufbaues kann dem zirkulierenden salzpartikelhaltigen Polyol auch eine kleine Menge eines Filtrationshilfsmittels zugesetzt werden, beispielsweise Cellulosefasern. Zur Durchführung solcher Filtrationen werden häufig sogenannte Kerzenfilter (z. B. FUNDABACs®, Hersteller: Fa. DrM), Tellerdruckfilter (z. B. vertrieben von SeitzSchenk®, einem Unternehmen der Pall®-Gruppe) oder Plattenfilter eingesetzt. Die Filtrationsvorgänge können durch die Einstellung von Prozessparametern, z. B. wie einer ausreichen hohen Druckdifferenz über die Filterschicht sowie einer über die Temperatur steuerbaren geeigneten Viskosität optimiert werden. Ein Vorteil der erfindungsgemäßen Methode ist, dass niedrige Filtrationsdauern zur Effizienz der Verfahrensführung beitragen, da sie sich gegenüber herkömmlichen Methoden durch verminderte Trüblaufzeiten auszeichnet. Werden Filtrationen in kleinerem Maßstab durchgeführt, können auch einfache, mit einer vorgefertigten Tiefenfilterschicht ausgestattete Drucknutschen verwendet werden. In diesem Fall kann der Aufbau eines als Tiefenfilter wirkenden Filterkuchens entfallen. Auch hierbei kann durch Wahl einer erhöhten Polyoltemperatur und / oder die Anhebung der Druckdifferenz über die Filtrationsschicht der Filtrationsvorgang beschleunigt werden. Im einfachsten Falle kann Letzteres beispielsweise durch Reduzierung des Drucks auf der Filtratseite auf Werte kleiner als 1 bar bewerkstelligt werden. Selbstverständlich ist die Abtrennung der gebildeten Neutralisationssalze nicht auf die Möglichkeit der Filtration beschränkt, sondern kann gemäß den dem Fachmann bekannten Methoden, wie beispielsweise Partikelsedimentation, Zentrifugation o.ä., vorgenommen werden. Die Effizienz von Sedimentations- und Zentrifugationsverfahren profitiert ebenfalls von den nach dem erfindungsgemäßen Verfahren zugänglichen guten Salzqualitäten.

Auch für fertig aufgearbeitete, salzfreie und stabilisierte Polyole werden Handhabung und Lagerung unter Sauerstoffausschluss empfohlen. Hierfür geeignete Inertgase sind beispielsweise Edelgase, Stickstoff oder Kohlendioxid, besonders geeignet sind Edelgase oder Stickstoff. Durch die Unterbindung von Sauerstoffzutritt lassen sich Produktverfärbungen weitestgehend vermeiden, dies gilt insbesondere bei erhöhten Temperaturen, die im Allgemeinen genutzt werden um durch Senkung der Produktviskosität die Handhabung der Fertigprodukte zu erleichtern. Darüber hinaus entstehen unter Inertgasatmosphäre auch deutlich weniger Peroxidgruppen, die unter Spaltung der Polyetherketten zur Bildung weiterer niedermolekularer oxidativer Abbauprodukte wie beispielsweise Acetaldehyd, Methanol, Ameisensäure, Ameisensäureester, Aceton und Formaldehyd beitragen. Somit können während der Lagerung der Fertigprodukte Qualitätsminderungen minimiert, der Gehalt an leichtflüchtigen organischen Verbindungen gesenkt und Geruchsbelästigungen sowie gesundheitliche Beeinträchtigungen vermieden werden.

Die nach dem erfindungsgemäßen Verfahren aufgearbeiteten Polyole weisen bevorzugt Gesamtbasengehalte von weniger als 100 ppm KOH, besonders bevorzugt von weniger als 50 ppm KOH auf. Die durch das erfindungsgemäße Verfahren hergestellten Polyole sind weitgehend trübungsfrei und besitzen niedrige Trübungswerte von vorzugsweise weniger als 1,5 NTU, besonders bevorzugt von weniger als 1,0 NTU. Die erfindungsgemäßen Polyole eignen sich durch ihre vorteilhaften Eigenschaften besonders als Ausgangskomponenten für die Herstellung von massiven oder geschäumten Polyurethanwerkstoffen sowie von Polyurethanelastomeren, da über die hohe Reinheit und den geringen Gehalt an Salzrückständen oder basischen Katalysatorresten unerwünschte Nebenreaktionen minimiert und / oder die Reaktivitäten gut kontrolliert werden können. Die Polyurethanwerkstoffe und -elastomere können auch Isocyanurat-, Allophanat- und Biuretstruktureinheiten enthalten. Mit den erfindungsgemäß aufgearbeiteten Polyolen ebenfalls möglich ist die Herstellung sogenannter Isocyanat-Präpolymere, bei deren Herstellung mindestens ein (Poly-)Isocyanat und mindestens ein nach dem erfindungsgemäßen Verfahren erhältliches Polyol eingesetzt werden, wobei das molare Verhältnis von Isocyanatgruppen zu Hydroxygruppen größer als 1 ist, so dass die resultierenden Präpolymere Isocyanatgruppen enthalten. Die Isocyanatgruppen der Präpolymere können in einem oder mehreren Schritten mit Zerewitinoff-aktive Wasserstoffatome enthaltenden Verbindungen umgesetzt werden zur Herstellung der eigentlichen Endprodukte, wie beispielsweise massive oder geschäumte Polyurethanwerkstoffe oder Polyurethanelastomere. In umgekehrter Weise ist es auch möglich (Poly-)Isocyanate und mindestens ein nach dem erfindungsgemäßen Verfahren aufgearbeitetes Polyol so umzusetzen, dass das molare Verhältnis von Isocyanatgruppen zu Hydroxygruppen kleiner als 1 ist und somit die resultierenden Vorpolymerisate Hydroxygruppen enthalten. Die Hydroxygruppen der Vorpolymerisate können in einem oder mehreren Schritten mit Isocyanatgruppen-haltigen Verbindungen umgesetzt werden zur Herstellung der eigentlichen Endprodukte wie massive oder geschäumte Polyurethanwerkstoffe oder Polyurethanelastomere.

Zur Herstellung von massiven oder geschäumten Polyurethanwerkstoffen sowie von Polyurethanelastomeren wird mindestens ein nach dem erfindungsgemäßen Verfahren aufgearbeitetes Polyol gegebenenfalls mit weiteren isocyanatreaktiven Komponenten gemischt und mit organischen Polyisocyanaten, gegebenenfalls in Gegenwart von Treibmitteln, Katalysatoren und / oder anderer Zusatzstoffe wie z. B. Zellstabilisatoren, zur Reaktion gebracht.

**Beispiele**

**Eingesetzte Rohstoffe:**

**Rohpolyol (alkalisches Alkylenoxidadditionsprodukt) A**

Für die Neutralisationsversuche wurde das alkalische Alkylenoxidadditionsprodukt eines langkettigen Polyetherpolyols verwendet, welches durch Kaliumhydroxid-katalysierte Addition zuerst eines inneren Propylenoxidblocks, dann eines äußeren Ethylenoxidblocks an Propylenglykol erhalten wurde. Bezogen auf die Gesamtmasse der dosierten Epoxide wurden 87 Gew.-% Propylenoxid als erster Block und 13 Gew.-% Ethylenoxid als Endblock dosiert. Als Katalysator wurden 4550 ppm KOH, bezogen auf die Ansatzgröße, eingesetzt. Die nach den verschiedenen in den Tabellen 1 und 2 aufgeführten Prozessvarianten aufgearbeiteten Proben besaßen eine OH-Zahl von 28 mg KOH / g.

**Rohpolyol (alkalisches Alkylenoxidadditionsprodukt) B**

Für die Neutralisationsversuche wurde das alkalische Alkylenoxidadditionsprodukt eines langkettigen Polyetherpolyols verwendet, welches durch Kaliumhydroxid -katalysierte Addition zuerst eines kurzen inneren Propylenoxidblocks (7.1 Gew.-%, bezogen auf die Menge aller dosierten Epoxide) dann eines Ethylenoxid- / Propylenoxidmischblocks (62,8 Gew.-% Ethylenoxid; 20,1 Gew.-% Propylenoxid, bezogen auf die Gesamtmenge aller dosierten Epoxide) und schließlich eines reinen Ethylenoxidblocks (10,0 Gew.-% Ethylenoxid, bezogen auf die Menge aller dosierten Epoxide) an Glycerin erhalten wurde. Als Katalysator wurden 4580 ppm KOH, bezogen auf die Ansatzgröße, eingesetzt. Die nach den verschiedenen in Tabelle 2 aufgeführten Prozessvarianten aufgearbeiteten Proben besaßen eine OH-Zahl von 37 mg KOH / g.

**Ambosol®**

Synthetisch hergestelltes und gefälltes, amorphes und kolloidales Magnesiumsilikat.

**IRGANOX® 1076:**

Octadecyl-3-(3,5-di-*tert*-butyl-4-hydroxyphenyl)propionat (Ciba Specialty Chemicals (jetzt BASF))

**Tiefenfilter:**

Tiefenfilter T 750 der Fa. Pall

**Allgemeine Beschreibung der Aufarbeitung eines Polyetherpolyols durch Neutralisation mit Phosphorsäure (es sind immer Absolutdrücke angegeben):**

In einer Glasrührapparatur mit aufgesetztem Rückflusskühler und Tropftrichter wurden 1000 g des Rohpolyols A vorgelegt und nach 3-maligem Evakuieren der Apparatur und Wiedereinleiten von Stickstoff unter Rühren auf eine Temperatur von 80 °C aufgeheizt. Nach Zugabe der erforderlichen Menge destillierten Wassers zum Erreichen der in Tabelle 1 angegebenen Gesamtwassermenge wurde durch Zugabe wässriger Phosphorsäurelösung in den in Tabelle 1 angegebenen Konzentrationen neutralisiert, wobei die in Tabelle 1 angegebenen Neutralisationsgrade eingestellt und die angegebenen Säurezugabezeiten (Inkontaktbringzeiten) eingehalten wurden. Das wasserhaltige neutralisierte Rohpolyol wurde sodann für die angegebene Temperzeit am Rückfluss bei Temperaturen zwischen 103 °C und 107 °C erhitzt und danach auf eine Temperatur von 100 °C abgekühlt. Der Rückflusskühler wurde gegen einen Destillationskühler getauscht. Wasser wurde über den angegebenen Zeitraum (Destillationszeit) über eine Druckrampe bei einer Temperatur von 100 °C abdestilliert, als Enddruck wurden 100 mbar angestrebt. Der Druck wurde sodann durch Einleiten von Stickstoff auf Atmosphärendruck angehoben und es wurden, bezogen auf die Menge an eingesetztem Rohpolyol, 0,4 Gew.-% Ambosol zugegeben. Es wurde wieder evakuiert und bei einer Temperatur von 110 °C bis zum Erreichen eines Drucks von 20 mbar weiter entwässert. Schließlich wurde das Produkt noch über einen Zeitraum von 3 h bei einer Temperatur von 110 °C bei einem Druck von 8 mbar ausgeheizt. Danach wurde unter Rühren abgekühlt und es wurden bei 90 °C während der Abkühlphase, bezogen auf die Menge an eingesetztem Rohpolyol, 0,046 Gew.-% IRGANOX 1076 zugegeben, gefolgt von einer Verrührzeit von 30 min bei 90 °C. Das Produkt wurde sodann bei einer Temperatur von 80 °C über einen Tiefenfilter in einer unbeheizten Drucknutsche unter Beaufschlagung mit 3 bar Stickstoffdruck filtriert und die hierfür erforderliche Zeit (Filtrationsdauer) notiert.

**Allgemeine Beschreibung der Aufarbeitung eines Polyetherpolyols durch Neutralisation mit Schwefelsäure (es sind immer Absolutdrücke angegeber (Vergleich)**

In einer Glasrührapparatur mit aufgesetztem Rückflusskühler und Tropftrichter wurden 1000 g des jeweiligen Rohpolyols (A oder B) vorgelegt und nach 3-maligem Evakuieren der Apparatur und Wiedereinleiten von Stickstoff unter Rühren auf eine Temperatur von 80 °C aufgeheizt. Nach Zugabe der erforderlichen Menge destillierten Wassers zum Erreichen der in Tabelle 2 angegebenen Gesamtwassermenge wurde durch Zugabe von 12 Gew.-%iger wässriger Schwefelsäurelösung neutralisiert, wobei die in Tabelle 2 angegebenen Neutralisationsgrade eingestellt und die angegebenen Säurezugabezeiten (Inkontaktbringzeiten) eingehalten wurden. Das wasserhaltige neutralisierte Rohpolyol wurde sodann für die angegebene Temperzeit am Rückfluss bei einer Temperatur von 110 °C erhitzt und danach auf eine Temperatur von 100 °C abgekühlt. Der Rückflusskühler wurde gegen einen Destillationskühler getauscht. Wasser wurde über den angegebenen Zeitraum (Destillationszeit) über eine Druckrampe bei einer Temperatur von 100 °C abdestilliert, als Enddruck wurden 100 mbar angestrebt. Die Temperatur wurde danach 110 °C angehoben und es wurde bis zum Erreichen eines Drucks von 20 mbar weiter entwässert. Schließlich wurde das Produkt noch über einen Zeitraum von 3 h bei einer Temperatur von 110 °C bei einem Druck von 8 mbar ausgeheizt. Danach wurde unter Rühren abgekühlt und es wurden bei einer Temperatur von 90 °C während der Abkühlphase, bezogen auf die Menge an eingesetztem Rohpolyol, 0,046 Gew.-% IRGANOX 1076 zugegeben, gefolgt von einer Verrührzeit von 30 min bei 90 °C. Das Produkt wurde sodann bei einer Temperatur von 80 °C über ein Tiefenfilter in einer unbeheizten Drucknutsche unter Beaufschlagung mit 3 bar Stickstoffdruck filtriert und die hierfür erforderliche Zeit (Filtrationsdauer) notiert.

**Mess- und Bestimmungsmethoden:**

**OH-Zahl**

Die Bestimmung der OH-Zahlen erfolgte gemäß der Vorschrift der DIN 53240.

**Bestimmung des Gesamtbasengehaltes**

Die Bestimmung des Gesamtbasengehaltes erfolgte gemäß der Vorschrift der DIN ISO 3771 über potentiometrische Titration mit Perchlorsäure in Eisessig unter wasserfreien Bedingungen.

**Bestimmung der Trübung**

Die Bestimmung der Trübungswerte erfolgte gemäß der Methode 180.1 der US-Umweltschutzbehörde USEPA (United States Environmental Protection Agency). Die Maßeinheit sind NTUs (nephelometric turbidity units).

**Bestimmung des Kaliumgehaltes**

Die Bestimmung des Kaliumgehaltes erfolgte gemäß der DIN EN 14109 über Atomabsorptionsspektrometrie.

Die Ergebnisse der Versuche zur Neutralisation der Rohpolyole A und B mit verschiedenen Neutralisationssäuren sind in Tabellen 1 und 2 zusammengefasst:

**Tabelle 1: Neutralisationsversuche mit Phosphorsäure, alle Versuche wurden mit Rohpolyol A durchgeführt**

| Beispiel | Gesamtwassermenge [Gew.-% bez. auf Rohpolyol]* | Zugabegedauer Säure ("Inkontakt-bringzeit") [min] | Neutr.-grad [%] | Konzentra-tion Säure [Gew.-% in Wasser] | Temperzeit bei Rückflusstemper-atur [min] | Destillation-szeit bei 100 °C [min] | Filtrationsdau-er [min] | Gesamtbasenge-halt [ppm KOH] | Trübung [NTU] | Kalium [ppm] |
|---|---|---|---|---|---|---|---|---|---|---|
| 1 (erf.) | 15 | 40 | 105 | 50 | 120 | 100 | 18,8 | 1 | 0,31 | 0,1 |
| 2 (erf.) | 15 | 20 | 105 | 18 | 120 | 50 | 42 | 2 | 0,334 | 0,1 |
| 3 (erf.) | 15 | 20 | 105 | 18 | 240 | 100 | 13 | 2 | 0,3 | 0,1 |
| 4 (erf.) | 10 | 21 | 105 | 18 | 240 | 100 | 10 | 2 | 0,36 | 0,1 |
| 5 (erf.) | 10 | 6 | 105 | 18 | 240 | 107 | 9 | 3 | 0,22 | 0,1 |
| 6 (erf.) | 15 | 22 | 105 | 18 | 120 | 104 | 10 | 3 | 0,4 | 0,1 |
| 7 (erf.) | 15 | 40 | 102 | 50 | 120 | 100 | 9 | 3 | 0,31 | 0,1 |
| 8 (erf.) | 15 | 40 | 107 | 18 | 120 | 100 | 14 | 3 | 0,27 | 0,1 |
| 9 (erf.) | 15 | 43 | 105 | 18 | 120 | 114 | 10 | 5 | 0,42 | 0,1 |
| 10 (erf.) | 15 | 40 | 107 | 50 | 120 | 100 | 19 | 9 | 0,69 | 4 |
| 11 (Vergl.) | 10 | 1 | 105 | 18 | 240 | 105 | 64 | 497 | 47,5 | 240 |
| 12 (Vergl.) | 10 | 1 | 105 | 18 | 120 | 115 | 50 | 703 | 79,7 | 320 |
| 13 (Vergl.) | 15 | 1 | 105 | 18 | 120 | 105 | 24 | 1585 | 284 | 690 |
| 14 (Vergl.) | 5 | 1 | 105 | 18 | 120 | 100 | 16 | 2464 | 500 | 1000 |

*: Summe aus Hydrolysewassermenge und der über die Dosierung der Säure eingebrachten Wassermenge

**Tabelle 2: Neutralisationsversuche mit Schwefelsäure (Vergleich)**

| Beispiel | Rohpolyol | Gesamtwassermenge [Gew.-% bez. auf Rohpolyol]* | Zugabedauer Säure ("Inkontaktbringzeit") [min] | Neutr.-grad [%] | Temperzeit bei Rückflusstemperatur [min] | Destillationszeit bei 100 °C [min] | Filtrationsdauer [min] | Gesamtbasengehalt [ppm KOH] | Trübung [NTU] | Kalium [ppm] |
|---|---|---|---|---|---|---|---|---|---|---|
| 15 (Vgl.) | A | 4,1 | 40 | 105 | 120 | 56 | 7,5 | 1 | 0,17 | 26 |
| 16 (Vgl.) | A | 4,1 | 40 | 105 | 5 | 72 | 14,5 | 5,6 | 0,63 | 68 |
| 17 (Vgl.) | B | 8,1 | 41 | 105 | 5 | 102 | 10 | 0 | 0,34 | 96 |
| 18 (Vgl.) | B | 3 | 40 | 102 | 5 | 45 | 46 | 11 | 0,64 | 45 |

\* : Summe aus Hydrolysewassermenge und der über die Dosierung der Säure eingebrachten Wassermenge

**Patentansprüche**

1. Verfahren zur Herstellung von Oxyalkyleneinheiten enthaltenden Polyolen umfassend folgende Schritte:

   (a) Addition einer Alkylenoxidverbindung an eine Starterverbindung mit zumindest einem Zerewitinoff-aktiven Wasserstoffatom in Gegenwart eines basischen Katalysators, wobei ein alkalisches Rohpolyol erhalten wird,
   (b) anschließende Neutralisation des alkalischen Rohpolyols durch Inkontaktbringen einer Säure mit dem alkalischen Rohpolyol über eine Zeitdauer t1,
   (c) gegebenenfalls Abtrennung von Wasser,
   (d) Abtrennung der gebildeten Neutralisationssalze,

   **dadurch gekennzeichnet, dass**

   in Schritt (b) eine definierte Zeitdauer t1 $\geq$ 5 min bis $\leq$ 10 h (Inkontaktbringzeit) für das Inkontaktbringen des alkalischen Rohpolyols mit der für die Neutralisation notwendigen Säuremenge eingehalten wird, wobei unter Inkontaktbringen die Erhöhung des Mengenverhältnisses zwischen Säure und alkalischem Rohpolyol während des Zusammengebens der beiden Komponenten, bis das Zielverhältnis von Säure/Rohpolyol erreicht ist, verstanden wird,
   und wobei Phosphorsäure oder Phosphorsäure und Schwefelsäure als Säure eingesetzt wird.

2. Verfahren zur Herstellung von Polyolen gemäß Anspruch 1, wobei der basische Katalysator in Schritt (a) ausgewählt ist aus mindestens einem Katalysator der Gruppe bestehend aus Alkalimetallhydriden, Alkalimetallcarboxylaten, Alkalimetallhydroxiden und Alkalimetallalkoxylaten.

3. Verfahren zur Herstellung von Polyolen gemäß Anspruch 1 oder 2, wobei Phosphorsäure oder Phosphorsäure und Schwefelsäure als wässrige Lösung in einer Konzentration von 5 bis 70 Gew.-% eingesetzt wird.

4. Verfahren zur Herstellung von Polyolen gemäß einem der Ansprüche 1 bis 3, wobei das Verfahren einen Hydrolyseschritt zwischen den Schritten (a) und (b) umfasst.

5. Verfahren zur Herstellung von Polyolen gemäß einem der Ansprüche 1 bis 4, wobei das Polyol nach der Neutralisation in Schritt (b) eine Gesamtwassermenge von 0,5 bis 25 Gew.%, bezogen auf die Menge an alkalischem Rohpolyol, enthält.

6. Verfahren zur Herstellung von Polyolen gemäß einem der Ansprüche 1 bis 5, wobei die Neutralisation in Schritt (b) bei einer Temperatur von 20 bis 150 °C erfolgt, insbesondere von 80 bis 130 °C.

7. Verfahren zur Herstellung von Polyolen gemäß einem der Ansprüche 1 bis 6, wobei bei der Zugabe der Säure in Schritt (b) ein Neutralisationsgrad von 90 bis 120 %, insbesondere von 102 bis 112 %, eingehalten wird.

8. Verfahren zur Herstellung von Polyolen gemäß einem der Ansprüche 1 bis 7, wobei der Gehalt an Oxyethyleneinheiten im alkalischen Rohpolyol, bezogen auf die Gesamtmasse der Monomerbausteine, $\geq$ 5 Gew.-% beträgt.

9. Verfahren zur Herstellung von Polyolen gemäß einem der Ansprüche 1 bis 8, wobei die Abtrennung der gebildeten Neutralisationssalze über Filtration erfolgt.

10. Verfahren zur Aufarbeitung von alkalischen Rohpolyolen, die durch Addition einer Alkylenoxidverbindung an eine Starterverbindung mit zumindest einem Zerewitinoff-aktiven Wasserstoffatom in Gegenwart eines basischen Katalysators hergestellt wurden, umfassend die Schritte:

   (b) Neutralisation des alkalischen Rohpolyols durch Inkontaktbringen einer Säure mit dem alkalischen Rohpolyol über eine Zeitdauer t1,
   (c) gegebenenfalls Abtrennung von Wasser,
   (d) Abtrennung der gebildeten Neutralisationssalze,

   **dadurch gekennzeichnet, dass**

   in Schritt (b) eine definierte Zeitdauer t1 $\geq$ 5 min bis $\leq$ 10 h für das Inkontaktbringen des alkalischen Rohpolyols mit der für die Neutralisation notwendigen Säuremenge eingehalten wird, wobei unter Inkontaktbringen die Erhöhung des Mengenverhältnisses zwischen Säure und alkalischem Rohpolyol während der Zusammengebens der beiden Komponenten, bis das Zielverhältnis von Säure/Rohpolyol erreicht ist, verstanden wird, und wobei Phosphorsäure oder Phosphorsäure und Schwefelsäure als Säure eingesetzt wird.

**Claims**

1. Process for preparing polyols containing oxyalkylene units, comprising the following steps:

   (a) adding an alkylene oxide compound onto a starter compound having at least one Zerewitinoff-active hydrogen atom in the presence of a basic catalyst to obtain an alkaline crude polyol,
   (b) subsequently neutralizing the alkaline crude polyol by contacting an acid with the alkaline crude polyol over a period of time t1,
   (c) optionally removing water,
   (d) removing the neutralization salts formed,

   **characterized in that**
   in step (b) a defined period of time t1 $\geq$ 5 min to $\leq$ 10 h (contacting time) is observed for the contacting of the alkaline crude polyol with the amount of acid needed for the neutralization, contacting being understood to mean the increasing of the ratio between acid and alkaline crude polyol during the combining of the two components until the target ratio of acid/crude polyol has been attained, and wherein phosphoric acid or phosphoric acid and sulfuric acid is used as acid.

2. Process for preparing polyols according to Claim 1, wherein the basic catalyst in step (a) is selected from at least one catalyst from the group consisting of alkali metal hydrides, alkali metal carboxylates, alkali metal hydroxides and alkali metal alkoxylates.

3. Process for preparing polyols according to Claim 1 or 2, wherein phosphoric acid or phosphoric acid and sulfuric acid is used in the form of an aqueous solution in a concentration of 5% to 70% by weight.

4. Process for preparing polyols according to any of Claims 1 to 3, wherein the process comprises a hydrolysis step between steps (a) and (b).

5. Process for preparing polyols according to any of Claims 1 to 4, wherein the polyol after the neutralization in step (b) contains a total amount of water of 0.5% to 25% by weight, based on the amount of alkaline crude polyol.

6. Process for preparing polyols according to any of Claims 1 to 5, wherein the neutralization in step (b) is effected at a temperature of 20 to 150°C, especially of 80 to 130°C.

7. Process for preparing polyols according to any of Claims 1 to 6, wherein on addition of the acid in step (b) a neutralization level of 90% to 120%, especially of 102% to 1120, is observed.

8. Process for preparing polyols according to any of Claims 1 to 7, wherein the content of oxyethylene units in the alkaline crude polyol, based on the total mass of the monomer units, is $\geq$ 5% by weight.

9. Process for preparing polyols according to any of Claims 1 to 8, wherein the neutralization salts formed are removed via filtration.

10. Process for workup of alkaline crude polyols which have been prepared by adding an alkylene oxide compound onto a starter compound having at least one Zerewitinoff-active hydrogen atom in the presence of a basic catalyst, comprising the steps of:

    (b) neutralizing the alkaline crude polyol by contacting an acid with the alkaline crude polyol over a period of time t1,
    (c) optionally removing water,
    (d) removing the neutralization salts formed,

**characterized in that**

in step (b) a defined period of time t1 ≥ 5 min to ≤ 10 h is observed for the contacting of the alkaline crude polyol with the amount of acid needed for the neutralization, contacting being understood to mean the increasing of the ratio between acid and alkaline crude polyol during the combining of the two components until the target ratio of acid/crude polyol has been attained,
and wherein phosphoric acid or phosphoric acid and sulfuric acid is used as acid.

**Revendications**

1. Procédé pour la préparation de polyols contenant des motifs oxyalkylène comprenant les étapes suivantes

    (a) ajout d'un composé de type oxyde d'alkylène à un composé d'amorçage comportant au moins un atome d'hydrogène actif selon Zéréwitinoff en présence d'un catalyseur basique, un polyol brut alcalin étant obtenu,
    (b) neutralisation ultérieure du polyol brut alcalin par mise en contact d'un acide avec le polyol brut alcalin sur une période de temps t1,
    (c) éventuellement séparation d'eau,
    (d) séparation des sels de neutralisation formés,

    **caractérisé en ce que**
    dans l'étape (b), une période de temps définie t1 ≥ 5 min à ≤ 10 h (temps de mise en contact) pour la mise en contact du polyol brut alcalin avec la quantité d'acide nécessaire pour la neutralisation est respectée, dans lequel on entend par mise en contact l'augmentation du rapport des quantités entre acide et polyol brut alcalin pendant l'ajout des deux composants, jusqu'à ce que le rapport cible d'acide/polyol brut soit atteint, et dans lequel l'acide phosphorique ou l'acide phosphorique et l'acide sulfurique étant utilisé en tant qu'acide.

2. Procédé pour la préparation de polyols selon la revendication 1, le catalyseur basique dans l'étape (a) étant choisi parmi au moins un catalyseur du groupe constitué par des hydrures de métal alcalin, des carboxylates de métal alcalin, des hydroxydes de métal alcalin et des alcoxylates de métal alcalin.

3. Procédé pour la préparation de polyols selon la revendication 1 ou 2, l'acide phosphorique ou l'acide phosphorique et l'acide sulfurique étant utilisé en tant que solution aqueuse en une concentration de 5 à 70 % en poids.

4. Procédé pour la préparation de polyols selon l'une quelconque des revendications 1 à 3, le procédé comprenant une étape d'hydrolyse entre les étapes (a) et (b).

5. Procédé pour la préparation de polyols selon l'une quelconque des revendications 1 à 4, le polyol contenant, après la neutralisation dans l'étape (b), une quantité totale d'eau de 0,5 à 25 % en poids, par rapport à la quantité de polyol brut alcalin.

6. Procédé pour la préparation de polyols selon l'une quelconque des revendications 1 à 5, la neutralisation dans l'étape (b) étant réalisée à une température de 20 à 150 °C, en particulier de 80 à 130 °C.

7. Procédé pour la préparation de polyols selon l'une quelconque des revendications 1 à 6, dans lequel lors de l'ajout de l'acide dans l'étape (b), un degré de neutralisation de 90 à 120 %, en particulier de 102 à 112 %, est maintenu.

8. Procédé pour la préparation de polyols selon l'une quelconque des revendications 1 à 7, la teneur en motifs oxyéthylène dans le polyol brut alcalin, par rapport à la masse totale des monomères, étant ≥ 5 % en poids.

9. Procédé pour la préparation de polyols selon l'une quelconque des revendications 1 à 8, la séparation des sels de neutralisation formés étant réalisée par filtration.

10. Procédé pour le traitement de polyols bruts alcalins, qui ont été préparés par ajout d'un composé de type oxyde d'alkylène à un composé d'amorçage comportant au moins un atome d'hydrogène actif selon Zéréwitinoff en présence d'un catalyseur basique, comprenant les étapes de :

    (b) neutralisation du polyol brut alcalin par mise en contact d'un acide avec le polyol brut alcalin sur une période de temps t1,
(c) éventuellement séparation d'eau,
(d) séparation des sels de neutralisation formés,

**caractérisé en ce que**
dans l'étape (b) une période de temps définie t1 ≥ 5 min à ≤ 10 pour la mise en contact du polyol brut alcalin avec la quantité d'acide nécessaire pour la neutralisation est respectée, dans lequel on entend par mise en contact l'augmentation du rapport des quantités entre acide et polyol brut alcalin pendant l'ajout des deux composants, jusqu'à ce que le rapport cible d'acide/polyol brut soit atteint, et dans lequel l'acide phosphorique ou l'acide phosphorique et l'acide sulfurique étant utilisé en tant qu'acide.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5470813 A
- EP 700949 A
- EP 743093 A
- EP 761708 A
- WO 9740086 A
- WO 9816310 A
- WO 0047649 A
- EP 1292631 A
- DE 10250429
- EP 1517941 A
- WO 9947582 A
- WO 2010145899 A
- US 4507475 A
- WO 018805 A
- EP 1525244 A
- US 4647595 A
- GB 1108013 A

**In der Beschreibung aufgeführte Nicht-Patentliteratur**

- **IONESCU et al.** *Advances in Urethane Science & Technology,* 1998, vol. 14, 151-218
- **DE LUCAS.** *Organic Process Research & Development,* 1999, vol. 3, 166-171
- Ullmann's Encyclopedia of Industrial Chemistry. 1992, vol. B4, 167ff
- Handbuch Apparate. Vulkan-Verlag, 1990, 188-208
- **DE LUCAS.** *Organic Process Research & Development,* 1999, vol. 3, 166-171
- Handbuch Apparate. Vulkan-Verlag, 1990, 188-208